Europäisches Patentamt

European Patent Office

Office européen des brevets

(19)

(11) Numéro de publication : **0 089 876**
**B1**

(12) # FASCICULE DE BREVET EUROPÉEN

(45) Date de publication du fascicule du brevet :
06.05.87

(51) Int. Cl.⁴ : **G 06 F 13/00**, G 07 F 7/10

(21) Numéro de dépôt : 83400515.9

(22) Date de dépôt : 14.03.83

(54) Procédé et dispositif de protection d'un logiciel livré par un fournisseur à un utilisateur.

(30) Priorité : 18.03.82 FR 8204612

(43) Date de publication de la demande :
28.09.83 Bulletin 83/39

(45) Mention de la délivrance du brevet :
06.05.87 Bulletin 87/19

(84) Etats contractants désignés :
AT BE CH DE FR GB IT LI NL SE

(56) Documents cités :
EP-A- 0 008 033
WO-A-80 /027 56
FR-A- 2 401 459
US-A- 4 105 156
IBM TECHNICAL DISCLOSURE BULLETIN, vol. 7, no.
6, novembre 1964, pages 438-439, New York, USA, J.
EVANS et al.: "Protection of memories on a word
basis"
IBM Technical Disclosure Bulletin, vol. 14, no. 11,
Avril 1972, pages 3531, 3532
Computation Planning Inc. technical note 7/28/77,
pages 1-3
IBM Nachrichten, février 1981, H. 21, pages 640-645
Second USA-Japan Computer Conference, 1975, Session 6-6-1 à 6-6-4, pages 139-142

(73) Titulaire : **BULL S.A.**
**121, Avenue de Malakoff**
**F-75016 Paris (FR)**

(72) Inventeur : **Mollier, Jean**
**94 avenue Gambetta**
**F-75020 Paris (FR)**

(74) Mandataire : **Debay, Yves et al**
**BULL S.A. Industrial Property Department 25 avenue**
**de la Grande-Armée**
**F-75016 Paris (FR)**

## Description

L'invention concerne généralement un procédé et un dispositif de protection d'un logiciel et a plus particulièrement pour objet un procédé et un dispositif par lesquels un fournisseur qui livre un logiciel à un utilisateur reste maître de ce logiciel en le rendant inexécutable dans sa forme telle que livrée, l'exécution de ce logiciel étant sous le contrôle d'une clé de validation délivrée à l'utilisateur par le fournisseur du logiciel.

L'art antérieur, notamment IBM Technical Disclosure Bulletin, (Vol. 14, n° 11, Avril 1972, pages 3531, 3532), EP-A-8033, Computation Planning Inc. Technical note (7/28/77, pages 1-3), suggère à rendre inexécutables des programmes tels que livrés aux utilisateurs.

Le document IBM décrit une solution qui permet de ne faire exécuter un programme que par une unité de traitement déterminée. Pour cela la première instruction du programme est une instruction spéciale qui contient un identificateur qui est comparé avec un identificateur câblé dans l'unité de traitement. L'exécution du programme ne peut avoir lieu que si il y a identité entre les deux identificateurs.

Le document EP-A-8033 décrit un microprocesseur chargé d'exécuter des programmes enregistrés d'une façon chiffrée dans une mémoire RAM. Une clé préenregistrée dans une mémoire du microprocesseur est utilisée pour déchiffrer chaque instruction du programme avant exécution. Les programmes ne peuvent être exécutés que par un microprocesseur déterminé.

Le document Computation Planning décrit un système dans lequel les programmes sont chiffrés pour éviter que des personnes non autorisées puissent prendre connaissance du contenu de ces programmes. Les programmes sont développés en dehors de l'ordinateur par un « hard-node » spécifique.

Ces trois documents proposent des solutions qui associent un programme à une machine déterminée.

Les documents IBM Nachrichten (Février 1981, H. 21, pages 640-645) et WO 80/02756 enseignent à délivrer à chaque utilisateur au moins un support portatif où est enregistré un code secret connu du fournisseur et propre à chaque utilisateur.

Ces documents concernent des procédures d'accès à un système, mais ne concernent pas des procédures d'autorisation d'exécution ou non d'un programme déterminé. Le document Second USA-Japan Computer Conference, 1975, (Session 6-6-1 à 6-6-4, pages 139-142) enseigne le fait que des informations extérieures sont introduites pour chiffrer et déchiffrer des informations enregistrées sur un disque et que l'on cherche à protéger. Plus précisément. ce document décrit un double niveau de sécurité obtenu par la combinaison d'une protection software et d'une protection hardware. La protection software est obtenue par l'utilisation d'un mot de passe qui permet de limiter l'accès aux données, et la protection hardware est obtenue par un encryptage des données enregistrées sur le disque. L'encryptage et le décryptage des données sont réalisés à partir d'une clé fournie par l'utilisateur.

Les trois derniers documents décrivent des procédures d'accès à des informations qui ne sont pas applicables à un fournisseur qui vend des programmes à des utilisateurs, car ces procédures sont mises en place par les utilisateurs eux-mêmes.

L'invention a pour but de proposer une solution qui garantit un fournisseur par la mise en place d'un moyen de contrôle qui permet de s'assurer qu'un programme, une fois vendu, ne pourra être exécuté que par un utilisateur déterminé et que ce programme ne pourra pas être exécuté simultanément sur plusieurs machines de l'utilisateur.

La solution proposée par l'invention associe un support portatif tel qu'une carte à un ou plusieurs programmes. Ainsi, pour exécuter un programme, l'utilisateur doit posséder le support portatif associé qui lui a été délivré par le fournisseur en même temps que le programme. Même si l'utilisateur fait des copies de ce programme, il ne pourra pas les faire exécuter simultanément sur plusieurs machines étant donné qu'il ne possède qu'une seule carte pour ce programme. C'est la carte qui va valider l'exécution du programme et non la machine chargée d'exécuter ce programme.

Il faut tout d'abord préciser ce qu'il faut entendre par les expressions « protection d'un logiciel » et par « logiciel inexécutable ».

### 1 - Protection d'un logiciel

Par logiciel, il faut entendre au moins un programme au sens classique et plus généralement un ensemble de programmes. D'une façon générale, l'organisation d'un système logiciel associé à une machine de traitement de l'information est telle qu'un minimum de protection est donnée aux programmes grâce aux procédures mises à disposition par le système d'exploitation de la machine. Ainsi, les programmes utilisateurs et les programmes systèmes bénéficient d'une protection les uns envers les autres, chaque programme ayant un espace mémoire attribué inaccessible pour les autres programmes.

En fait, une telle protection est inhérente à la bonne gestion et à la bonne marche d'un centre de calcul.

La protection du logiciel conférée par l'invention se situe à un autre niveau. Plus précisément, il s'agit de donner au fournisseur d'un logiciel un maximum de garanties quant à la diffusion de ce logiciel. En d'autres termes et dans l'esprit de l'invention, il ne s'agit pas de donner au logiciel une protection au sens de la propriété littéraire et artistique en cherchant à protéger le contenu même du logiciel, mais il s'agit en fait de donner au détenteur d'un logiciel une protection vis-à-vis d'un utilisateur potentiel en se donnant les moyens pour contrôler que seul cet utilisateur pourra utiliser ce logiciel.

· En effet, dès l'instant où un fournisseur négocie avec un utilisateur potentiel la location ou la vente d'un programme, ce fournisseur n'avait jusqu'à présent aucun moyen de contrôle quant à l'utilisation de ce programme par cet utilisateur. De ce fait, cet utilisateur pouvait ensuite se substituer très facilement au fournisseur pour livrer à son tour le programme à un autre utilisateur.

2 - Logiciel inexécutable

D'une façon générale, tout programme n'est pas directement exécutable par une machine de traitement de l'information. En effet, un programme doit subir plusieurs transformations avant d'être exécuté. Dans l'esprit de l'invention, le programme, même après avoir subi les transformations précitées, restera encore inexécutable.

Toujours dans l'esprit de l'invention, cette notion d'inexécution d'un programme n'est pas à associer à une notion de secret. En effet, il ne s'agit pas d'interdire la connaissance du programme à l'utilisateur, mais de contrôler l'utilisation de ce programme par cet utilisateur.

Selon l'invention, le fournisseur est donc amené à donner à tout utilisateur potentiel un programme incomplet ou brouillé et au moins une clé de validation permettant de rendre exécutable le programme.

L'invention propose donc un procédé de protection d'un logiciel constitué par des programmes, le détenteur ou fournisseur de ces programmes étant amené à négocier ces programmes à des utilisateurs potentiels possédant une machine de traitement de l'information sur laquelle peuvent être exécutés ces programmes du type consistant à rendre inexécutables ces programmes en l'état tels que livrés aux utilisateurs, caractérisé en ce qu'il consiste, pour permettre au fournisseur de garder le contrôle de la diffusion de ces programmes une fois ceux-ci livrés aux utilisateurs :

à délivrer à chaque utilisateur au moins un support portatif tel qu'une carte comprenant au moins des circuits de traitement et une zone mémoire où est enregistré un code secret seul connu du fournisseur et propre à chaque utilisateur ;

à associer à chaque programme une clé de validation prédéterminée définie en fonction du programme et du code secret contenu dans la carte de l'utilisateur, pour la nécessaire transformation de ce programme en un programme exécutable une fois la carte accouplée ou connectée avec la machine de l'utilisateur.

Selon une autre caractéristique du procédé conforme à l'invention, la clé de validation précitée est définie à partir, d'une part, d'une clé principale de validation délivrée par le fournisseur et disponible sur la machine de l'utilisateur et, d'autre part, d'une clé complémentaire de validation calculée, au niveau de la carte délivrée à l'utilisateur, à partir du code secret et d'arguments d'identification propres à chaque programme et qui sont enregistrés dans la zone mémoire de la carte.

Selon une autre caractéristique importante de l'invention, le procédé consiste à garder les mêmes arguments d'identification pour un même programme quel que soit l'utilisateur de ce programme ; et à donner une clé principale de validation différente d'une part, pour chaque programme livré à un utilisateur, et d'autre part, pour un même programme livré à un autre utilisateur.

L'intérêt d'une telle procédure réside notamment dans la facturation par un fournisseur du logiciel vendu ou loué à un utilisateur. En d'autres termes, un fournisseur peut posséder une bibliothèque de n programmes qui peut être vendue ou louée à un utilisateur qui, moyennant paiement, aura la jouissance de tout ou partie de cette bibliothèque.

Ainsi, le fournisseur définira une clé de validation pour chaque programme choisi par un utilisateur et délivrera une carte propre à cet utilisateur dans laquelle est enregistré un code secret seul connu du fournisseur et propre à cet utilisateur. A partir de cette clé de validation et du code secret, comme définis précédemment, chaque programme pourra être rendu exécutable. Bien entendu, une fois un programme rendu exécutable, il peut être conservé en mémoire centrale de la machine et être réutilisé directement sans faire appel à nouveau à la procédure de protection conforme à l'invention, mais cette procédure devra jouer à nouveau à chaque fois que le programme est rechargé en mémoire centrale.

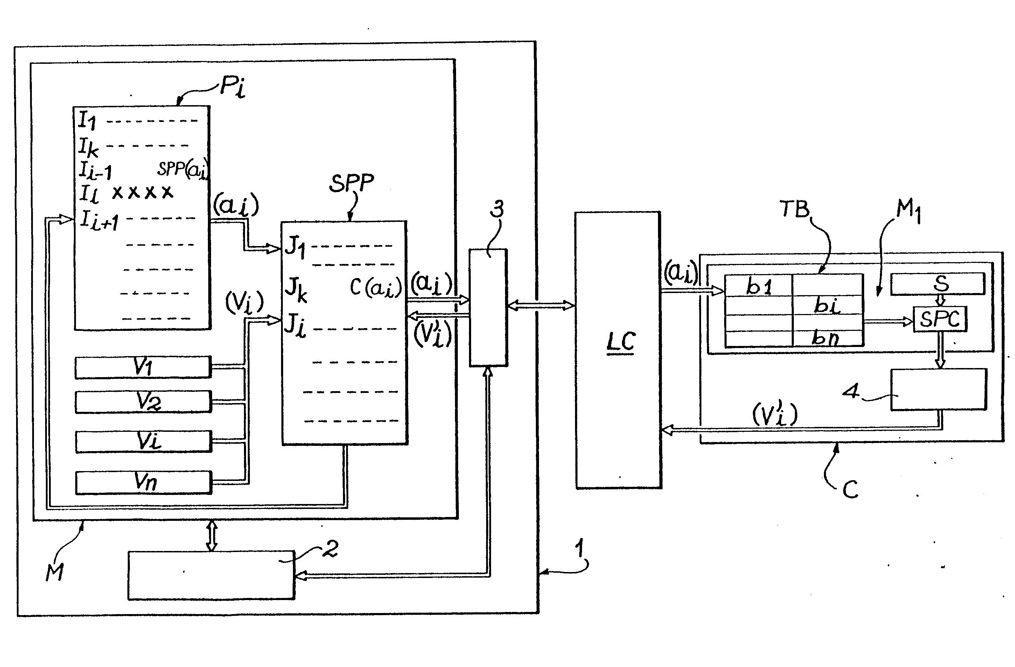

D'autres avantages et détails apparaîtront plus clairement à l'aide de la description explicative qui va suivre faite en référence à la figure annexée donnée à titre d'exemple et qui illustre schématiquement le principe du procédé conforme à l'invention.

Soit une personne possédant une bibliothèque de programmes $(P_i... P_i... P_n)$. Cette personne dénommée fournisseur est susceptible de louer ou de vendre ces programmes à des utilisateurs potentiels possédant au moins une machine de traitement de l'information sur laquelle peuvent être exécutés ces programmes.

Avant d'expliciter en détail le procédé conforme à l'invention qui va dorénavant permettre à ce fournisseur de contrôler la diffusion des programmes livrés à des utilisateurs, il va être décrit succinctement les moyens matériels indispensables à l'exécution du procédé et la nature des informations traitées par ces moyens matériels.

En référence à la figure, une machine de traitement de l'information (1) d'un utilisateur potentiel des programmes $(P_i... P_...  P_n)$ doit comprendre au moins une mémoire (M), des circuits de commande et de traitement (2) des informations stockées dans la mémoire (M) et un dispositif d'entrée-sortie (3).

La mémoire (M) est destinée à contenir :

au moins un programme ($P_i$) de la bibliothèque de programmes ($P_l$... $P_i$... $P_n$) en vue de son exécution par la machine (I),

un sous-programme pilote (SPP) donné par le fournisseur, et

des clés principales de validation ($V_l$,... $V_i$... $V_n$) à raison d'une clé par programme ; ces clés prédéterminées sont données par le fournisseur et sont destinées à être associées à des clés complémentaires de validation ($V'_l$,... $V'_i$,... $V'_n$) comme cela sera explicité par la suite.

Les circuits de commande et de traitement (2) sont classiques avec des spécificités propres au type de la machine utilisée.

En plus de cette machine (1), un utilisateur potentiel doit posséder les matériels annexes suivants :

au moins un support portatif tel qu'une carte (C) délivrée par le fournisseur et destinée à coopérer avec la machine (1),

et un lecteur de carte (LC) accouplé à la machine (1) par l'intermédiaire du dispositif d'entrée-sortie (3) précité.

La carte (C) spécifique d'un utilisateur déterminé comprend au moins :

une mémoire (MI) dans laquelle sont enregistrés : un code secret (S) ; un sous-programme de calcul (SPC) ; et un tableau (TB) contenant un ensemble d'arguments ($b_l$,... $b_i$,... $b_m$) d'identification des programmes ($P_l$,... $P_i$,... $P_n$) ; et des circuits de traitement (4) permettant d'assurer l'exécution du sous-programme de calcul (SPC).

Le lecteur (LC) est essentiellement destiné à assurer le transfert des informations entre la machine (1) et la carte (C), les circuits composant ce lecteur ne présentant pas de caractéristiques particulières dans le cadre de l'invention.

Conformément à l'invention, l'exécution de chaque programme ($P_l$... $P_i$... $P_n$) est sous le contrôle d'une clé de validation propre au programme et à l'utilisateur. Ainsi, chaque programme est sous le contrôle d'une clé de validation qui est en fait constituée, côté machine (1), d'une clé principale de validation prédéterminée (V) et, côté carte (C), d'une clé complémentaire de validation (V') calculée avant l'exécution du programme.

La clé complémentaire de validation (V') est calculée par les circuits de traitement (4) de la carte (C) qui exécutent le sous-programme de calcul (SPC). Ce sous-programme (SPC) prend en compte le code secret (S) enregistré dans la mémoire (M1) de la carte (C) et au moins un argument d'identification ($b^i$) propre à chaque programme ($P_i$) et déterminé par le fournisseur.

Une carte (C) est délivrée à l'utilisateur et tous les arguments d'identification ($b_l$... $b_i$... $b_n$) des programmes ($P_l$... $P_i$... $P_n$) sont préenregistrés dans le tableau (TB) stocké dans la mémoire (M1) de la carte (C). Chaque argument d'identification ($b_i$) est par exemple une donnée alphanumérique, et chaque programme peut être identifié par un ou plusieurs arguments. Il est important de noter que les arguments d'identification des programmes sont de préférence identiques pour tous les utilisateurs potentiels des programmes.

L'adressage du ou des arguments d'identification ($b_l$... $b_i$... $b_m$) d'un programme ($P_i$) pour calculer la clé complémentaire de validation (V') s'effectue à partir de paramètres d'identification ($a_l$... $a_i$... $a_m$) contenus dans chaque programme et transmis à la carte (C) avant l'exécution du programme.

Pour limiter la place mémoire occupée par le tableau (TB) dans la mémoire (M1) de la carte, il est avantageux d'identifier chaque programme par au moins deux arguments d'identification. De cette manière, il n'est pas nécessaire de stocker autant d'arguments d'identification que de programmes. A titre d'exemple, si le tableau (TB) contient m arguments ($b_i$) avec m < à n (n étant le nombre de programmes) et si chaque programme est identifié par deux arguments, il est possible d'adresser $C^m_n$ programmes.

La clé principale de validation (V), côté machine (1), est donnée par le fournisseur qui, connaissant le code secret (S) de la carte (C) délivrée à l'utilisateur et les arguments d'identification ($b_l$... $b_i$...$b_m$) de chaque programme ($P_l$... $P_i$... $P_n$), peut connaître à l'avance la valeur de la clé complémentaire de validation (V') et déterminer ainsi la valeur de la clé principale de validation (V) associée, ces deux clés (V) et (V') étant combinées d'une certaine façon par le sous-programme (SPP) pour rendre exécutable le programme associé.

La façon de rendre inexécutable un programme n'est pas unique et la solution choisie ne modifie pas le principe de l'invention dès l'instant où l'exécution du programme est contrôlée par une clé de validation à deux niveaux (V, V') telle que définie précédemment. Chaque programme ($P_l$... $P_i$... $P_n$) peut être rendu inexécutable ou brouillé dans sa totalité ou en partie seulement.

Pour expliciter le procédé conforme à l'invention, supposons un utilisateur désireux d'acquérir le programme ($P_i$) de la bibliothèque de programmes ($P_l$... $P_i$... $P_n$), chacun de ces programmes étant rendu inexécutable en l'état tel que livré.

Le fournisseur va donner à cet utilisateur :

une bande ou un disque programme contenant l'ensemble des programmes ($P_l$... $P_i$... $P_n$),

une carte (C) telle que définie précédemment et contenant notamment un code secret (S) propre à cet utilisateur,

le sous-programme (SPP) précité qui va être enregistré dans la mémoire (M) de la machine (1) de l'utilisateur, et

la clé principale de validation ($V_i$) propre au programme ($P_i$) et qui va être également enregistrée dans la mémoire (M) de la machine (1) ou contenue dans le programme ($P_i$).

Lorsque l'utilisateur est désireux d'exécuter le programme ($P_i$), il charge tout d'abord ce programme ($P_i$) dans la mémoire (M) de sa machine (I) à partir du disque programme donné par le fournisseur. Ensuite. le système d'exploitation de la machine (I) fait subir à ce programme ($P_i$) les transformations classiques inhérentes à la mise en état d'exécution de ce programme ($P_i$). Conformément à l'invention, même après avoir subi ces transformations, le programme ($P_i$) est toujours inexécutable.

Pour le rendre exécutable, l'utilisateur va introduire la carte (C) associée à sa machine (I) dans le lecteur (LC) accouplé à la machine (I).

Supposons que le programme ($P_i$) soit en partie brouillé seulement. En se reportant à la figure, supposons que le programme ($P_i$) contienne une instruction brouillée, à savoir le code instruction de l'instruction ($I_i$). Dans ces conditions, les instructions précédentes ($I_1$) à ($I_k$) vont être exécutées normalement et l'instruction ($I_i$-1) qui précède l'instruction ($I_i$) va faire un déroutement vers le sous-programme (SPP) en fournissant au moins un paramètre d'identification ($a_i$) du programme ($P_i$).

Le sous-programme pilote (SPP) s'exécute et au niveau de son instruction ($J_k$) assure un déroutement vers la carte (C) par l'intermédiaire du dispositif d'entrée-sortie (3) sous le contrôle des circuits de commande (2) de la machine (1). Le sous-programme (SPP) envoie à la carte (C) le paramètre d'identification ($a_i$) afin d'adresser au moins un argument d'identification ($b_i$) du tableau (TB) enregistré dans la mémoire (M1) de la carte (C). Au niveau de la carte (C) s'exécute alors le sous-programme de calcul (SPC) qui prend au compte l'argument ($b_i$) du programme ($P_i$) et le code secret (S) de la carte pour calculer la clé complémentaire de validation ($V'_i$) par l'intermédiaire des circuits de traitement (4) de la carte (C).

Une fois la clé complémentaire de validation ($V'_i$) du programme ($P_i$) calculée, la valeur de cette clé ($V'_i$) est renvoyée par l'intermédiaire du lecteur (LC) et du circuit d'entrée-sortie (3) de la machine (1) vers le sous-programme pilote (SPP). L'instruction ($J_i$) du sous-programme (SPP) va prendre en compte cette clé complémentaire de validation ($V'_i$) ainsi que la clé principale de validation ($V_i$) préenregistrée dans la mémoire (M) de la machine (1) et associée au programme ($P_i$). A partir de ces deux clés de validation ($V_i$) et ($V'_i$), le sous-programme pilote (SPP) va débrouiller l'instruction ($I_i$) du programme ($P_i$). A titre d'exemple, les deux clés ($V_i$) et ($V'_i$) peuvent être des configurations binaires à p bits avec le sous-programme (SPP) qui effectue une opération logique telle qu'un « OU EXCLUSIF » sur ces deux configurations binaires, le résultat de cette opération logique donnant le code instruction de l'instruction ($I_i$) du programme ($P_i$). De cette façon, l'instruction ($I_i$) du programme ($P_i$) est débrouillée et le programme ($P_i$) peut ensuite être exécuté entièrement.

Selon une autre caractéristique de l'invention, un même utilisateur peut posséder une seule carte (C) pour plusieurs machines (1). Dans ce cas, un même programme ne pourra pas tourner simultanément sur plusieurs machines, car la carte de l'utilisateur doit être maintenue accouplée à une machine pour assurer l'exécution du programme sur cette machine.

Bien entendu, un utilisateur peut acheter plusieurs fois, par exemple deux fois, un même programme, et il lui faudra alors deux cartes différentes pour faire tourner ce même programme simultanément sur deux machines.

Enfin, si une carte est délivrée pour l'exécution possible de m programmes parmi n programmes disponibles et si l'utilisateur désire obtenir l'exécution d'autres programmes non achetés initialement, il n'est pas nécessaire que le fournisseur lui délivre une autre carte. En effet, il suffit au fournisseur de fournir simplement la clé de validation principale du ou des programmes nouveaux sans avoir à modifier la carte déjà délivrée.

Pour permettre au fournisseur des programmes de rester maître de leur diffusion, il est important que les informations enregistrées au niveau de chaque carte soient inaccessibles de l'extérieur pour éviter toute fraude possible.

**Revendications**

1. Procédé de protection d'un logiciel constitué par des programmes ($P_1$,... $P_i$,... $P_n$), le détenteur ou fournisseur de ces programmes étant amené à négocier ces programmes à des utilisateurs possédant une machine (1) de traitement de l'information sur laquelle peuvent être exécutés ces programmes, du type consistant à rendre inexécutables ces programmes ($P_1$,... $p_i$,... $P_n$) en l'état tels que livrés aux utilisateurs, caractérisé en ce qu'il consiste, pour permettre au fournisseur de garder le contrôle de la diffusion de ces programmes une fois ceux-ci livrés aux utilisateurs :

à délivrer à chaque utilisateur au moins un support portatif (C) tel qu'une carte comprenant au moins des circuits de traitement (4) et une zone mémoire (M1) où est enregistré un code secret (S) seul connu du fournisseur et propre à chaque utilisateur ;

à associer à chaque programme ($P_i$) une clé de validation ($V_i$ ; $V'_i$) prédéterminée définie en fonction du programme ($P_i$) et du code secret (S) contenu dans la carte (C) de l'utilisateur, pour la nécessaire transformation de ce programme ($P_i$) en un programme exécutable une fois la carte (C) accouplée avec la machine (1) de l'utilisateur.

2. Procédé selon la revendication 1, caractérisé en ce qu'il consiste à définir la clé de validation ($V_i$ ; $V'_i$) précitée à partir, d'une part, d'une clé principale de validation ($V_i$) délivrée par le fournisseur et enregistrée dans une zone mémoire (M) de la machine (1) des utilisateurs et, d'autre part, d'une clé complémentaire de validation ($V'_i$) calculée, au niveau de la carte (C) délivrée à l'utilisateur, à partir du code secret (S) et d'arguments ($b_i$) identifiant chaque programme et qui sont enregistrés dans la zone mémoire (M1) de la carte (C).

3. Procédé selon la revendication 1 ou 2, caractérisé en ce qu'il consiste :

à garder les mêmes arguments d'identification ($b_i$) pour un même programme quel que soit l'utilisateur de ce programme, et

à donner par conséquent une clé principale de validation ($V_i$) différente d'une part, pour chaque programme ($P_i$) livré à un utilisateur et d'autre part, pour un même programme (P$_i$) livré à un autre utilisateur.

4. Procédé selon la revendication 1, 2 ou 3, caractérisé en ce qu'il consiste au niveau de chaque carte (C) associée à un utilisateur :

à préenregistrer les arguments d'identification (b$_1$,... b$_i$,... b$_n$) des programmes sous la forme d'un tableau (TB) stocké dans la zone mémoire (M1) de la carte (C),

et à adresser au moins un argument d'identification (B$_i$) d'un programme (P$_i$) à partir d'au moins un paramètre d'identification (a$_i$) contenu dans ce programme.

5. Procédé selon l'une des revendications précédentes, caractérisé en ce qu'il consiste :

à accoupler à chaque machine (1) des utilisateurs un lecteur de cartes (LC) dans lequel est préalablement introduit la carte (C) associée à cette machine (1),

à enregistrer dans la zone mémoire de la machine un sous-programme pilote (SPP) de dialogue entre la machine (1) et la carte (C);

et à transformer les programmes inexécutables en programmes exécutables par l'intermédiaire de ce sous-programme (SPP) qui prend en compte les paramètres d'identification (a$_i$) d'un programme à exécuter pour les transmettre à la carte (C), à recevoir des circuits de traitement (4) de la carte (C) la clé complémentaire de validation (V'$_i$) calculée à partir des arguments (b$_i$) adressés par les paramètres d'identification (a$_i$) et du code secret (S) de la carte (C) et à combiner cette clé complémentaire de validation (V'$_i$) avec la clé principale de validation (V$_i$) préenregistrée associée au programme (P$_i$) à exécuter afin de rendre ce programme exécutable.

6. Procédé selon l'une des revendications précédentes, caractérisé en ce qu'il consiste à contrôler au moins une instruction de chaque programme (P$_i$) en la rendant inexécutable par brouillage de son code instruction par exemple.

7. Procédé selon la revendication 6, caractérisé en ce qu'il consiste à donner à chaque clé principale de validation (V$_i$) et à chaque clé complémentaire de validation (V'$_i$), une configuration binaire à p bits.

8. Procédé selon la revendication 7, caractérisé en ce qu'il consiste, pour débrouiller le code instruction de l'instruction précitée, à effectuer une opération logique telle qu'un « OU EXCLUSIF » sur la clé principale de validation (V$_i$) et la clé complémentaire de validation (V'$_i$) pour obtenir le code instruction assimilable par la machine (1).

9. Dispositif pour la mise en œuvre du procédé tel que défini selon l'une des revendications précédentes, du type comprenant une machine (1) de traitement de l'information appartenant à un utilisateur et possédant au moins une mémoire (M1), des circuits de commande et de traitement (2), un dispositif d'entrée-sortie (3), caractérisé en ce qu'il comprend :

une carte (C) spécifique de l'utilisateur possédant au moins une mémoire (M1), des circuits de traitement (4),

et un lecteur de carte (LC) accouplé au dispositif d'entrée-sortie (3) de la machine (1) ; la mémoire (M1) de la machine (1) contenant au moins un programme brouillé (P$_i$) donné par un fournisseur, une clé principale de validation (V$_i$) donnée par le fournisseur ; la mémoire (M1) de la carte (C) contenant au moins un code secret (S), des arguments d'identification (b$_i$) du programme (P$_i$) adressés à partir de paramètres d'identification (a$_i$) contenus dans le programme (P$_i$), les circuits de traitement (4) calculant une clé complémentaire de validation (V'$_i$) à partir du code secret (S) et des arguments d'identification (b$_i$) du programme (P$_i$) ; et en ce que cette clé (V'$_i$) est combinée avec la clé (V$_i$) associée dans un sous-programme pilote (SPP) enregistré dans la mémoire (M) de la machine (1) pour débrouiller et rendre exécutable le programme (P$_i$).

## Claims

1. Method for the protection of a logic system (software) comprising programs (P$_1$,... P$_i$,... P$_n$), the holder or supplier of these programs being enabled to trade these programs to users owning a data processing machine (1) on which these programs may be executed, of the kind consisting in rendering these programs (P$_1$... P$_i$... P$_n$) non-executable in the condition in which they are supplied to the users, characterised in that for the purpose of enabling the supplier to retain control over the dissemination of these programs once these have been supplied to the users, it consists :

in supplying each user with at least one portable carrier (C) such as a card comprising at least processing circuits (4) and a memory section (M1) in which is recorded a secret code (S) known only to the supplier and personal to each user ;

in associating with each program (P$_i$) a predetermined validation key (V$_i$ ; V'$_i$) defined as a function of program (P$_i$) and of the secret code (S) contained in the user's card, for the required conversion of this program (P$_i$) into an executable program once the card (C) is coupled to the user's machine (1).

2. Method according to claim 1, characterised in that it consists in defining the said validation key (V$_i$ ; V'$_i$) starting from on the one hand, a principal validation key (V$_i$) provided by the supplier and recorded in a memory section (M) of the user's machine (1) and, on the other hand, on a complementary validation key (V'$_i$) computed at the stage of the card (C) supplied to the user on the basis of the secret code (S) and of variables (b$_i$) identifying each program and which are recorded in the memory section (M1) of the card (C).

3. Method according to claim 1 or 2, characterised in that it consists :

in retaining the same identifying variables (b$_i$) for one and the same program no matter who the user of this program may be, and

in consequently issuing a principal validation key (V$_i$) which is different, on the one hand, for

each program ($P_i$) supplied to a user, and on the other hand, for an identical program ($P_i$) supplied to another user.

4. Method according to claim 1, 2 or 3, characterised in that at the level of each card (C) allocated to a user, it consists :

in prerecording the identifying variables ($b_l$... $b_i$... $b_n$) of the programs in the form of a table (TB) stored in the memory section (M1) of card (C), and in addressing at least one identifying variable ($B_i$) of a program ($P_i$) on the basis of at least one identifying parameter ($a_i$) contained in this program.

5. Method according to any one of the preceding claims, characterised in that it consists :

in coupling with each users' machine (1) a card reader (LC) into which the card (C) allocated to this machine (1) is introduced initially,

in recording a pilot subprogram (SPP) for dialog between the machine (1) and the card (C) in the memory section of the machine,

and in converting the non-executable programs into executable programs by means of this subprogram (SPP) which takes into account the identifying parameters ($a_i$) of a program which is to be executed for the purpose of transmitting these to the card (C), in receiving from the processing circuits (4) of the card (C) the complementary validation key ($V'_i$) calculated on the basis of the variables ($b_i$) addressed by means of the identifying parameters ($a_i$) and of the secret code (S) of the card (C) and in combining this complementary validation key ($V'_i$) with the prerecorded principal validation key ($V_i$) allocated to the program ($P_i$) which is to be executed, in order to render this program executable.

6. Method according to any one of the preceding claims, characterised in that it consists in controlling at least one instruction of each program ($P_i$) by rendering it non-executable, for example by scrambling of its instruction code.

7. Method according to claim 6, characterised in that it consists in giving a binary configuration comprising p bits to each principal validation key ($V_i$) and to each complementary validation key ($V'_i$).

8. Method according to claim 7, characterised in that for the purpose of unscrambling the instruction code of the aforesaid instruction, it consists in performing a logic operation such as an « EXCLUSIVE OR » operation on the principal validation key ($V_i$) and the complementary validation key ($V'_i$) in order to obtain the instruction code assimilable by the machine (1).

9. Device for carrying out the method as defined according to any one of the preceding claims, of the kind comprising a data processing machine (1) belonging to a user and incorporating at least one memory (M1), control and processing circuits (2), an input-output device (3) characterised in that it comprises :

a card (C) specific to the user having at least one memory (M1), and processing circuits (4),

and a card reader (LC) coupled to the input-output device (3) of the machine (1) ; the memory (M1) of the machine (1) containing at least one scrambled program ($P_i$) provided by a supplier, a principal validation key ($V_i$) provided by a supplier ; the memory (M1) of the card (C) containing at least one secret code (S), variables ($b_i$) for identification of the program ($P_i$) addressed on the basis of identifying parameters ($a_i$) contained in the program ($P_i$), the processing circuits (4) calculating a complementary validation key ($V'_i$) from the secret code (S) and from the identification variables ($b_i$) of the program ($P_i$) ; and in that this key ($V'_i$) is combined with the associated key ($V_i$) in a pilot subprogram (SPP) recorded in the memory (M) of the machine (1) for the purpose of unscrambling and rendering executable the program ($P_i$).

**Patentansprüche**

1. Verfahren zum Schützen von Software, die aus Programmen ($P_l$,... $P_i$,..., $P_n$) gebildet ist, wobei der Besitzer oder Lieferant dieser Programme Anwendern diese Programme anbietet, welche eine Datenverarbeitungsmaschine (1) besitzen, auf der diese Programme ausgeführt werden können, vom Typ, der darin besteht, diese Programme ($P_l$,... $P_i$,..., $P_n$) im Zustand, wie sie den Anwendern geliefert wurden, unausführbar zu machen, dadurch gekennzeichnet, daß es zu dem Zweck, dem Lieferant zu ermöglichen, die Verbreitung dieser Programme zu kontrollieren, nachdem sie den Anwendern geliefert wurden, darin besteht, daß :

jedem Anwender wenigstens ein tragbarer Träger (C) wie eine Karte ausgegeben wird, welche wenigstens Verarbeitungsschaltungen (4) und eine Speicherzone (M1) umfaßt, worin ein Geheimcode (S) gespeichert ist, welcher nur dem Lieferant bekannt ist und der jedem Anwender einzeln zugeordnet ist ;

jedem Programm ($P_i$) ein vorbestimmter Freigabeschlüssel ($V_i$ ; $V'_i$) zugeordnet wird, welcher in Abhängigkeit von dem Programm ($P_i$) und von dem Geheimcode (S) definiert ist, der auf der Karte (C) des Anwenders enthalten ist, für die notwendige Umwandlung dieses Programmes ($P_i$) in ein ausführbares Programm, nachdem die Karte (C) an die Maschine (1) des Anwenders angekoppelt ist.

2. Verfahren nach Anspruch 1, dadurch gekennzeichnet, daß es darin besteht, daß der vorgenannte Freigabeschlüssel ($V_i$ ; $V'_i$) definiert wird ausgehend von einem Hauptfreigabeschlüssel ($V_i$) einerseits, welcher vom Lieferant ausgegeben wird und in einer Speicherzone (M) der Maschine (1) der Anwender gespeichert wird, und andererseits von einem komplementären Freigabeschlüssel ($V'_i$), der im Bereich der an den Anwender ausgegebenen Karte (C) berechnet wird aus dem Geheimcode (C) und aus Argumenten ($b_i$), welche jedes Programm identifizieren und die in der Speicherzone (M1) der Karte (C) aufgezeichnet sind.

3. Verfahren nach Anspruch 1 oder 2, dadurch gekennzeichnet, daß es darin besteht, daß

dieselben Identifikationsargumente ($b_i$) für ein selbes Programm unabhängig vom Anwender dieses Programmes beibehalten werden und

ein Hauptfreigabeschlüssel ($V_i$) ausgegeben wird, der einerseits für jedes einem Anwender gelieferte Programm ($P_i$) und andererseits für dasselbe, einem anderen Anwender gelieferte Programm ($P_i$) verschieden ist.

4. Verfahren nach Anspruch 1, 2 oder 3, dadurch gekennzeichnet, daß es darin besteht, daß im Bereich jeder Karte (C), die einem Anwender zugeordnet ist :

die Identifikationsargumente ($b_l$,... $b_i$,... $b_n$) der Programme in Form einer Tabelle (TB) zuvor aufgezeichnet werden, welche in der Speicherzone (M1) der Karte (C) gespeichert wird,

und wenigstens ein Identifikationargument ($B_i$) eines Programmes ($P_i$) adressiert wird ausgehend von wenigstens einem Identifikationsparameter ($a_i$), der in diesem Programm enthalten ist.

5. Verfahren nach einem der vorstehenden Ansprüche, dadurch gekennzeichnet, daß es darin besteht, daß :

an jede Maschine (1) der Anwender ein Kartenlesegerät (LC) angekoppelt wird, in welches die dieser Maschine (1) zugeordnete Karte (C) zuvor eingegeben wird,

in der Speicherzone der Maschine ein Pilot-Unterprogramm (SPP) für den Dialog zwischen der Maschine (1) und der Karte (C) aufgezeichnet wird,

und daß die unausführbaren Programme in ausführbare Programme umgewandelt werden über dieses Unterprogramm (SPP), welches die Identifikationsparameter ($a_i$) eines auszuführenden Programmes berücksichtigt, um sie der Karte (C) zuzuführen, von den Verarbeitungsschaltungen (4) der Karte (C) den komplementären Freigabeschlüssel ($V'_i$) zu empfangen, welcher aus Argumenten ($b_i$), die durch die Identifikationsparameter ($a_i$) adressiert werden, und aus dem Geheimcode (S) der Karte (C) berechnet wird, und diesen komplementären Freigabeschlüssel ($V'_i$) mit dem zuvor aufgezeichneten Hauptfreigabeschlüssel ($V_i$) zu kombinieren, welcher dem auszuführenden Programm ($P_i$) zugeordnet ist, um dieses Programm ausführbar zu machen.

6. Verfahren nach einem der vorstehenden Ansprüche, dadurch gekennzeichnet, daß es darin besteht, wenigstens einen Befehl jedes Programmes ($P_i$) dahingehend zu kontrollieren, daß er durch Störung beispielsweise seines Befehlscodes unausführbar gemacht wird.

7. Verfahren nach Anspruch 6, dadurch gekennzeichnet, daß es darin besteht, jedem Hauptfreigabeschlüssel ($V_i$) und jedem komplementären Freigabeschlüssel ($V'_i$) eine Binärkonfiguration zu p Bits zu verleihen. .

8. Verfahren nach Anspruch 7, dadurch gekennzeichnet, daß es darin besteht, zu dem Zweck, den Befehlscode des vorgenannten Befehls zu entstören, eine Logikoperation wie eine « EXKLUSIV-ODER »-Operation mit dem Hauptfreigabeschlüssel ($V_i$) und dem komplementären Freigabeschlüssel ($V'_i$) auszuführen, um den Befehlscode zu erhalten, welchen die Maschine (1) annimmt.

9. Vorrichtung zur Durchführung des Verfahrens nach einem der vorstehenden Ansprüche, vom Typ mit einer Informationsverarbeitungsmaschine (1), die einem Anwender gehört und wenigstens einen Speicher (M1), Steuer- und Verarbeitungsschaltungen (2) sowie eine Ein/Ausgangs-Vorrichtung (3) enthält, dadurch gekennzeichnet, daß sie umfaßt :

eine Karte (C), die für den Anwender spezifisch ist und wenigstens einen Speicher (M1) und Verarbeitungsschaltungen (4) besitzt,

und einen Kartenleser (LC), der an die Ein/Ausgangs-Vorrichtung (3) der Maschine (1) angekoppelt ist ; wobei der Speicher (M1) der Maschine (1) wenigstens ein gestörtes Programm ($P_i$) enthält, das von einem Lieferant ausgegeben wurde, einen Hauptfreigabeschlüssel ($V_i$) enthält, der vom Lieferant ausgegeben wurde ; wobei der Speicher (M1) der Karte (C) wenigstens einen Geheimcode (S) enthält, sowie Identifikationsargumente ($b_i$) des Programmes ($P_i$), die ausgehend von Identifikationsparametern ($a_i$) adressiert werden, welche in dem Programm ($P_i$) enthalten sind, wobei die Verarbeitungsschaltungen (4) einen komplementären Freigabeschlüssel ($V'_i$) aus dem Geheimcode (S) und den Identifikationsargumenten ($b_i$) des Programmes ($P_i$) berechnen ; und daß dieser Schlüssel ($V'_i$) mit dem zugeordneten Schlüssel ($V_i$) in einem Pilot-Unterprogramm (SPP) kombiniert wird, das in dem Speicher (M) der Maschine (1) gespeichert ist, um das Programm ($P_i$) zu entstören und ausführbar zu machen.

0 089 876